# EUROPEAN PATENT APPLICATION

(11) **EP 4 667 504 A1**
(43) Date of publication of application: **24.12.2025**
(21) Application number: 25181655.9
(22) Date of filing: 10.06.2025
(51) Int. Cl.: C08G 18/12, C08G 18/10, C08G 18/32, C08G 18/48, C08G 18/60, C08G 18/76, C08G 69/26, C08K 3/04, C08L 75/08, C08L 77/06

(54) **SPRAYING-FREE MEMORY NANO NYLON RESIN AND PREPARATION METHOD THEREOF**

(30) Priority: 21.06.2024 CN 202410809057
(71) Applicant: Shenzhen Keruishi Optics Technology Co., Ltd., Shenzhen 518000 (CN)
(72) Inventor: LI, Xiaoping, Shenzhen, 518000 (CN); LI, Hao, Shenzhen, 518000 (CN)
(74) Representative: Plavsa, Olga

(57) **Abstract**

The present invention relates to the technical field of compositions of high polymer compounds, and particularly discloses a spraying-free memory nano nylon resin and a preparation method thereof. A nylon resin comprises the following raw materials in parts by weight:40-70 parts of modified nylon, 10-20 parts of styrene-butadiene-acrylonitrile copolymer, 5-10 partsofcompatibilizer, 0.5-5 parts of antioxidant, 2-10 partsoflubricant, and 1-5 parts of pigment. The present invention further provides a preparation method thereof. Compared with the existing technology, the nylon resin in the present invention has excellent toughness and resilience, which is capable of bending, twisting, and recovering its original shape. Besides, it has a smooth surface that eliminates the need for painting after molding.

## Description

### TECHNICAL FIELD

The present invention relates to the technical field of compositions of high polymer compositions, in particular to a spraying-free memory nano nylon resin and a preparation method thereof.

### BACKGROUND

Materials that can respond to external factors such as temperatures, magnetic fields or light, and recover their initial shapes, are called shape memory materials. In particular, shape memory polymers are favored for their ease of fabrications, low production costs, excellent shape memory properties, and high degree of customizability, and have been widely applied in various fields, including biomedical engineering, self-healing materials, aerospace, and heat-shrinkable materials. Main matrices of these polymers include polyester, polyurethane, polyethylene, etc. However, the shape memory polymers face some challenges in practical applications, primarily due to the limitations of their matrix materials such as insufficient mechanical strength and poor chemical stability, which limits their further applications and developments.

Patent document CN202011163136.6 discloses a nylon 6 composition with excellent shape memory properties, which is prepared from the following components in parts by weight:100 parts of caprolactam, 5-10 parts of caprolactone, 1-2 parts of catalyst, 0.5-1parts of activator,3-5 parts of needle-like nano-hydroxyapatite, and 1-2 parts of antioxidant. The invention also discloses a preparation method of the above nylon 6 composition. By adding caprolactone and needle-like nano-hydroxyapatite into caprolactam according to a reasonable ratio, the invention can significantly increase the shape memory performance of the composition. However, excessive amounts of the caprolactone or needle-like nano-hydroxyapatite, and hydroxyapatite with larger particle sizes or spherical morphology, cannot improve the shape memory performances of the composition.

Patent document CN201410247150.2 discloses a memory nylon rubber-plastic material, which is made of the following components in mass percentage: modified nylon, maleic anhydride graft copolymer, and additives; wherein the modified nylon is prepared from: 35-42% caprolactam; 5-25% vinyl-terminated phenyl silicone oil;0.1-0.5 %initiator; 1-10%aromatic diacids; 15-40%polyether; 0.1-1.1% catalyst; 1-10% chain extender; and 0.5-1.5% antioxidants. The invention also discloses a preparation method of the above memory nylon rubber-plastic material. The invention adopts the vinyl-terminated phenyl silicone oil to modify the polyamide hard segments of the nylon, thereby enhancing the low-temperature toughness, oxidation resistance, weather resistance, heat resistance, flame retardancy, and other comprehensive properties of the nylon. The maleic anhydride graft copolymer is further used to toughen and modify the nylon so as to obtain a nylon rubber-plastic material with plastic and rubber properties, which improves the shape memory recovery effects and overall mechanical performances, overcomes the issues of poor elasticity and weak shape recovery in conventional nylon or plastic materials, and enhances the memory properties of products such as headphone cables.

As a high-performance engineering plastic, the nylon contains huge amounts of polar amide bonds in its molecular structure, and these bonds form strong hydrogen bonds between molecular chains, thereby enhancing cohesive strength of the material. Meanwhile, the molecular chain of the nylon has a high regularity, resulting in a high crystallinity. Notably, the methylene in the nylon molecular chain brings good flexibility. In addition to excellent mechanical properties, the nylon also exhibits excellent low temperature performance, electrical insulation performance and chemical stability. Therefore, using the nylon as the matrix material to develop novel shape memory materials is expected to endow such materials with more excellent performances and widen broader market prospects. However, there are few studies on the shape memory materials of the nylon matrix and there are some defects such as insufficient mechanical properties, which needs to be solved urgently.

### SUMMARY

In view of the above defects of the existing technology, the technical problem to be solved by the present invention is to provide a spraying-free memory nano nylon resin and a preparation method thereof.

Since the nylon materials have the disadvantages of poor dimensional stability, poor low temperature toughness, insufficient heat resistance and toughness, which limit their applications in shape memory materials. In the present invention, an amino-terminated nylon is first prepared as a matrix. As a hard segment with moderate molecular weight, it cannot only fix the material but also avoids excessive strength and modulus caused by overly high molecular weight, which would hinder shape memory behavior. Subsequently, (bibenzyl-4,4'-diyl) diisocyanate, polytetrahydrofuran, and trimethylolpropane are mixed to obtain a soft segment, which plays the role of a deformation material. After the hard and soft segments are polymerized, the modified nylon is obtained. The soft and hard segments form a microphase separation structure in the system, and the construction of the microphase separation structure plays a decisive role in the shape memory performance. Consequently, the prepared modified nylon exhibits high rigidity, excellent flexibility, and outstanding resilience, so that it can rapidly recover its original shape after deformation. Besides, the styrene-butadiene-acrylonitrile copolymerimparts excellent gloss to the material, so that the obtained resin has excellent gloss, eliminating the need for painting, thereby simplifying process in application.

To achieve the above purpose, the present invention provides a spraying-free memory nano nylon resin, comprising the following raw materials in parts by weight: 40-70 parts of modified nylon, 10-20 parts of styrene-butadiene-acrylonitrile copolymer, 5-10 parts of compatibilizer, 0.5-5 parts of antioxidant, 2-10 parts of lubricant, and 1-5 parts of pigment.

Further, the compatibilizer is a maleic anhydride-grafted ethylene-octene copolymer.

Further, the antioxidant is one of β-(3,5-di-tert-butyl-4-hydroxyphenyl) propanoic acid n-octadecyl alcohol ester, tetrakis[β-(3.5-di-tert-butyl,4-hydroxyphenyl) propionic acid] pentaerythritol or N,N'-bis[3-(3,5-di-tert-butyl-4-hydroxyphenyl) propionyl] hexamethylenediamine.

Further, the lubricant is one of calcium stearate, polyethylene wax or magnesium carbonate.

Further, the pigment is a carbon black.

A preparation method of the modified nylon comprises the following steps:
X1: adding methylene succinic acid into anhydrous ethanol to obtain Solution A; adding tetramethylenediamine into anhydrous ethanol to obtain Solution B; mixing the Solution B into the Solution A, heating to 60-80°C and stirring for 1-2 hours, then cooling to room temperature and filtering to obtain a residue; drying the residue, melting the dried residue under an inert atmosphere by heating to 140-150°C, then raising the temperature to 150-160°C and maintaining for 2-3 hours; evacuating the system under vacuum and performing melt polycondensation for 4-6 hours; and adding tetramethylene diamine to terminate reaction, thereby obtaining the amine-terminated nylon;
X2: mixing 30-60 parts by weight of (bibenzyl-4,4'-diyl) diisocyanate with 100-250 parts by weight of polytetrahydrofuran under an inert atmosphere, heating to 70-80°C to perform prepolymerization for 1-2 hours; and then adding 20-40 parts by weight of trimethylolpropane to proceed polymerization for 1-2 hours, using the reaction mixture directly in the next step after reaction finished;
X3: mixing the amino-terminated nylon with the product from the previous step uniformly at a molar ratio of 1:1, then heating the mixture to 180-200°C with continuous stirring for 1-2 hours for polymerization to obtain the modified nylon.

Further, a heating temperature in the step X2 is 70-80°C.

Further, a heating temperature in the step X3 is 180-200°C.

Preferably, the preparation method of the modified nylon comprises the following steps:
X1: adding 10-15 parts by weight of methylene succinic acid into 50-100 parts by weight of anhydrous ethanol to obtain Solution A; adding 5-15 parts by weight of tetramethylenediamine into 30-50 parts by weight of anhydrous ethanol to obtain Solution B; mixing the Solution B into the Solution A, heating to 60-80°C and stirring for 1-2 hours, then cooling to room temperature and filtering to obtain a residue; drying the residue, melting the dried residue under an inert atmosphere by heating to 140-150°C, then raising the temperature to 150-160°C and maintaining for 2-3 hours; evacuating the system under vacuum and performing melt polycondensation for 4-6 hours; and adding tetramethylene diamine in an amount of 2% by weight of the residue to terminate reaction, thereby obtaining the amine-terminated nylon;
X2: mixing 30-60 parts by weight of (bibenzyl-4,4'-diyl) diisocyanate with 100-250 parts by weight of polytetrahydrofuran under an inert atmosphere, heating to 70-80°C to perform prepolymerization for 1-2 hours; and then adding 20-40 parts by weight of trimethylolpropane to proceed polymerization for 1-2 hours, using the reaction mixture directly in the next step after reaction finished;
X3: mixing the amino-terminated nylon with the product from the previous step uniformly at a molar ratio of 1:1, then heating to 180-200°C with continuous stirring for 1-2 hours for polymerization to obtain the modified nylon.

A preparation method of spraying-free memory nano nylon resin comprises the following steps:
S1: mixing raw materials according to a specified ratio, stirring and blending at 80-100°C under a certain rotational speed, and then feeding into an extruder for kneading and extrusion;
S2: cooling extrudate with water, and then pelletizing to obtain a final product.

Further, a rotational speed is 1000-1500rpm.

Further, a mixing temperature is 150-200°C.

The present invention has the following beneficial effects.
1. Compared with the existing technology, in the present invention, an amino-terminated nylon is used as a hard segment to provide rigidity inside the structure, a soft segment is obtained after a polytetrahydrofuran is polymerized, and a modified nylon is obtained after the hard and soft segments are polymerized. The soft and hard segments form a microphase separation structure in the system, and the construction of the microphase separation structure plays a decisive role in the shape memory performances. Consequently, the prepared modified nylon exhibits high rigidity and excellent flexibility.
2.The nylon resin prepared by the present invention has excellent toughness and resilience, has excellent toughness and resilience, which is capable of bending, twisting, and recovering its original shape. Besides, it has a smooth surface that eliminates the need for painting after molding.

### DESCRIPTION OF THE EMBODIMENTS

(Bibenzyl-4,4'-diyldiyl) diisocynate, CAS No.: 1034-24-8.

Polytetrahydrofuran, Mw=2000, Model No.: DYT-005, Deyitai.

Styrene-butadiene-acrylonitrile copolymer, Brand: TR-530F, Shanghai Yisufa New Materials.

Maleic anhydride-grafted ethylene-octene copolymer, Model No.: Dow 8137, Dongguan Yingxiang Plastic Raw Materials.

Comparative example 1

A preparation method of spraying-free memory nano nylon resin comprises the following steps:
S1: mixing 500 g of modified nylon, 150 g of styrene-butadiene-acrylonitrile copolymer, 80 g of maleic anhydride-grafted ethylene-octene copolymer, 5 g of β-(3,5-di-tert-butyl-4-hydroxyphenyl) propanoic acid n-octadecyl alcohol este, 50 g of calcium stearate, and 20 g of carbon black, stirring and blending at 80°C and 1200rpm, and then feeding into an extruder for kneading and extrusion at 160°C;
S2: cooling extrudate with water, and then pelletizing to obtain a final product.

A preparation method of a modified nylon comprises the following steps:
X1: adding 130 g of methylene succinic acid into 650 mL anhydrous ethanol to obtain Solution A; adding 90 g of tetramethylenediamine into 400 mL anhydrous ethanol to obtain Solution B; mixing the Solution B into the Solution A, heating to 70°C and stirring for 1 hour, then cooling to room temperature and filtering to obtain a residue; drying the residue, melting the dried residue under an inert atmosphere by heating to 150°C, then raising the temperature to 160°C and maintaining for 3 hours; evacuating the system under vacuum and performing melt polycondensation for 6 hours; and adding tetramethylene diamine in an amount of 2% by weight of the residue to terminate reaction, thereby obtaining the amine-terminated nylon;
X2: mixing 500 g of (bibenzyl-4,4'-diyl)diisocyanate with 1900 g of polytetrahydrofuran under an inert atmosphere, heating to 75°C to perform prepolymerization for 2 hours; using the reaction mixture directly in the next step after reaction finished;
X3: mixing the amino-terminated nylon with the product from the previous step uniformly at a molar ratio of 1:1, then heating to 190°C with continuous stirring for 2 hours for polymerization to obtain the modified nylon.

### Comparative example 2

A preparation method of spraying-free memory nano nylon resin comprises the following steps:
S1: mixing 500 g of modified nylon, 150 g of styrene-butadiene-acrylonitrile copolymer, 80 g of maleic anhydride-grafted ethylene-octene copolymer, 5 g of β-(3,5-di-tert-butyl-4-hydroxyphenyl) propanoic acid n-octadecyl alcohol este, 50 g of calcium stearate, and 20 g of carbon black, stirring and blending at 80°C and 1200rpm, and then feeding into an extruder for kneading and extrusion at 160°C;
S2: cooling extrudate with water, and then pelletizing to obtain a final product.

A preparation method of a modified nylon comprises the following steps:
Mixing 1000 g of caprolactam, 80 g of caprolactone, and 20 g of sodium hydroxide and heating to 120°C, evacuating under vacuum and removing water for 20 minutes, stirring for 1 hour and then adding 15 g of (bibenzyl-4,4'-diyl)diisocyanate and polymerizing at 180°C for 1 hour to obtain the modified nylon.

### Embodiment 1

A preparation method of spraying-free memory nano nylon resin comprises the following steps:
S1: mixing 500 g of modified nylon, 150 g of styrene-butadiene-acrylonitrile copolymer, 80 g of maleic anhydride-grafted ethylene-octene copolymer, 5 g of β-(3,5-di-tert-butyl-4-hydroxyphenyl) propanoic acid n-octadecyl alcohol este, 50 g of calcium stearate, and 20 g of carbon black, stirring and blending at 80°C and 1200rpm, and then feeding into an extruder for kneading and extrusion at 160°C;
S2: cooling extrudate with water, and then pelletizing to obtain a final product.

A preparation method of a modified nylon comprises the following steps:
X1: adding 130 g of methylene succinic acid into 650 mL anhydrous ethanol to obtain Solution A; adding 90 g of tetramethylenediamine into 400 mL anhydrous ethanol to obtain Solution B; mixing the Solution B into the Solution A, heating the mixture to 70°C and stirring for 1 hour, then cooling to room temperature and filtering to obtain a residue; drying the residue, melting the dried residue under an inert atmosphere by heating to 150°C, then raising the temperature to 160°C and maintaining for 3 hours; evacuating the system under vacuum and performing melt polycondensation for 6 hours; and adding tetramethylene diamine in an amount of 2% by weight of the residue to terminate reaction, thereby obtaining the amine-terminated nylon;
X2: mixing 500 g of (bibenzyl-4,4'-diyl)diisocyanate with 1900 g of polytetrahydrofuran under an inert atmosphere, heating the mixture to 75°C to perform prepolymerization for 2 hours; and then adding 30 g of trimethylolpropane to proceed polymerization for 2 hours, using the reaction mixture directly in the next step after reaction finished;
X3: mixing the amino-terminated nylon with the product from the previous step uniformly at a molar ratio of 1:1, then heating the mixture to 190°C with continuous stirring for 2 hours for polymerization to obtain the modified nylon.

### Embodiment 2

Compared to the Embodiment 1, the only difference is that the styrene-butadiene-acrylonitrile copolymer is 120 g.

### Embodiment 3

Compared to the Embodiment 1, the only difference is that the styrene-butadiene-acrylonitrile copolymer is 170 g.

### Embodiment 4

Compared to the Embodiment 1, the only difference is that the carbon black is 10g.

### Embodiment 5

Compared to the Embodiment 1, the only difference is that the carbon black is 30g.

### Test case 1

Mechanical properties of the nylon resins in the Comparative examples and Embodiments, including tensile strength and elongation at break, were tested according to the testing method specified in GB/T 1040. 3-2006 "Plastic-Determination of tensile properties-Part 3: Test conditions for films and sheets", with a tensile speed of 50 mm/min. The glossiness of the nylon resin material was tested according to ISO 2813:2014 "Paints and varnishes-Determination of specular gloss values at 20°, 60°and 85°".

**Table 1 presents the test results of the mechanical properties and glossiness of the nylon resin.**

| Experimental schemes | Tensile strength/MPa | Elongation at break / % | Glossiness (60 °) |
|---|---|---|---|
| Comparative example 1 | 130.1 | 200 .4 | 88 |
| Comparative example 2 | 121.2 | 168 .7 | 87 |
| Embodiment 1 | 138 .6 | 350.3 | 89 |
| Embodiment 2 | 136 .5 | 340.1 | 80 |
| Embodiment 3 | 137 .3 | 341.6 | 90 |
| Embodiment 4 | 137.1 | 345.2 | 82 |
| Embodiment 5 | 133 .2 | 325.4 | 90 |

As can be seen from the Table 1, compared to the conventional shape memory nylon material in Comparative example 2, the nylon resins prepared by the Embodiments exhibit significantly better tensile and resilience. This is likely due to the amino-terminated nylon in the Embodiments used as the hard segments provide rigidity inside the structures, the soft segment is obtained after the polytetrahydrofuran is polymerized, and the modified nylon is obtained after the hard and soft segments are polymerized. The soft and hard segments form the microphase separation structure in the system, and the construction of the microphase separation structure plays a decisive role in the shape memory performances. Consequently, the prepared modified nylon exhibits high rigidity and excellent flexibility. In the Comparative example 1, the trimethylolpropane was not added when the polytetrahydrofuran was used as the matrix to obtain the soft segment, so that the final soft segment structure was smaller and crosslinking points were fewer. Consequently, the modified nylon has lower crosslinking density, which negatively affects its mechanical properties. In the Embodiment 1, multiple of the crosslinking points were formed when the soft and hard segments were polymerized, thereby forming a tighter structure. Compared to the Embodiment 1, the amount of the styrene-butadiene-butadiene-acrylonitrile copolymer in the Embodiments 2-3 is different, which leads to different glossiness of the material, but there is little difference between the Embodiment 3 and the Embodiment 2. Compared to the Embodiment 1, the different amounts of the carbon black in the Embodiments 4-5 will lead to different black brightness of the material, thereby affecting the glossiness. However, due to poor dispersibility of the carbon black, excessive amounts will affect the mechanical properties of the material. Thus, the material in the Embodiment 1 is relatively best.

### Test case 2

The shape memory properties of the nylon resins prepared in the comparative examples and the Embodiments were tested. The testing method is that: a sample strip with an initial length of L0 is kept at a constant temperature of 80°C for 10 minutes, then stretched to 200% deformation at a tensile speed of 10 mm/min, and after keeping this state for 10 minutes, the temperature is lowered to 30°C,the sample is crystallized and set for 10 minutes, and the length of the spline at this point is recorded as L1. The stress is then removed, and after 10 minutes, the length of the spline is recorded as L2. Subsequently, the temperature is raised again to 230°C and kept for 10 minutes, then cooled to 30°Cagain and kept for 30 minutes, and the final length of the spline is recorded as L3.The shape fixation ratio and shape recovery ratio were calculated as follows: Shape fixation rate: Rf=(L2-L0)/(L1-L0)×100%, Shape recovery rate: Rr =(L2-L3)/(L2-L0)×100%.

**Table2 presents the shape memory test results of the nylon resin.**

| Experimental schemes | Shape fixed ratio/% | Shape recovery ratio/% |
|---|---|---|
| Comparative example 1 | 92.2 | 91.1 |
| Embodiment 1 | 99.8 | 99.1 |
| Embodiment 2 | 98.8 | 98.3 |
| Embodiment 3 | 99.0 | 99.1 |
| Embodiment 4 | 98.8 | 98.6 |
| Embodiment 5 | 98.3 | 97.5 |

The nylon resin in the present invention is composed of hard and soft segments arranged in a block copolymer structure, and a two-phase separated aggregation structure is within the system. The soft segment has relatively low melting point or glass transition temperature, while the hard segment typically has higher melting point or glass transition temperature, thereby endowing the material with shape memory properties. The amino-terminated nylon on the main chain serves as a fixed phase, and the polymer obtained by the polytetrahydrofuran serves as a reversible phase. Through processing and deformation, the material acquires the shape memory performance; when subjected to stimulation such as deformation or temperature changes, the material undergoes transformations. However, since the material has excellent resilience, it can quickly return to its original shape. It can be seen from the shape memory test that the nylon resins prepared by the Embodiments have excellent resilience performances. The shape test data of the Embodiments 1-5 are not much different, which may be attributed to the fact that the shape memory performance is primarily determined by the modified nylon. The amount of the modified nylon in the Embodiments is the same, but the stretchability still affects the shape after deformation to a certain extent, so the shape memory performances between the Embodiments are not the same. Compared to the Embodiment 1, the trimethylolpropane was not added in the Comparative example 1 when the polytetrahydrofuran was used as the matrix to obtain the soft segment, so the final soft segment structure was smaller and crosslinking points were fewer. Consequently, the modified nylon has lower crosslinking degree. However, the soft segment in the Embodiment1 has greater molecular chain orientation, so the resilience is better. Compared to the Comparative example 2, the amino-terminated nylon in the Embodiment 1 used as the hard segments provide rigidity inside the structures, the soft segment is obtained after the polytetrahydrofuran is polymerized, and the modified nylon is obtained after the hard and soft segments are polymerized. The soft and hard segments form the microphase separation structure in the system, and the construction of the microphase separation structure plays a decisive role in the shape memory performances. Consequently, the prepared modified nylon exhibits high rigidity and excellent flexibility.

The preferred embodiments of the present invention are described in detail above. It should be understood that those skilled in the art may make numerous modifications and variations based on the inventive concepts without creative efforts. Accordingly, any technical solutions obtainable by technicians in the field through logical analysis, reasoning, or limited experimentation on the basis of the existing technology and the inventive concepts shall fall within the protection scope defined by the claims.

## Claims

1. A spraying-free memory nano nylon resin, comprising the following raw materials in parts by weight: 40-70 parts of modified nylon, 10-20 parts of styrene-butadiene-acrylonitrile copolymer, 5-10 parts of compatibilizer, 0.5-5 parts of antioxidant, 2-10 parts of lubricant, and 1-5 parts of pigment;
wherein a preparation method of the modified nylon comprises the following steps:
X1: adding 10-15 parts by weight of methylene succinic acid into 50-100 parts by weight of anhydrous ethanol to obtain Solution A; adding 5-15 parts by weight of tetramethylenediamine into 30-50 parts by weight of anhydrous ethanol to obtain Solution B; mixing the Solution B into the Solution A, heating to 60-80°C and stirring for 1-2 hours, then cooling to room temperature and filtering to obtain a residue; drying the residue, melting the dried residue under an inert atmosphere by heating to 140-150°C, then raising the temperature to 150-160°C and maintaining for 2-3 hours; evacuating the system under vacuum and performing melt polycondensation for 4-6 hours; and adding tetramethylene diamine in an amount of 2% by weight of the residue to terminate reaction, thereby obtaining the amine-terminated nylon;
X2: mixing 30-60 parts by weight of (bibenzyl-4,4'-diyl)diisocyanate with 100-250 parts by weight of polytetrahydrofuran under an inert atmosphere, heating to 70-80°C to perform prepolymerization for 1-2 hours; and then adding 20-40 parts by weight of trimethylolpropane to proceed polymerization for 1-2 hours, using the reaction mixture directly in the next step after reaction finished;
X3: mixing the amino-terminated nylon with the product from the previous step uniformly at a molar ratio of 1:1, then heating to 180-200°C with continuous stirring for 1-2 hours for polymerization to obtain the modified nylon.

2. The spraying-free memory nano nylon resin according to claim 1, wherein the compatibilizer is a maleic anhydride-grafted ethylene-octene copolymer.

3. The spraying-free memory nano nylon resin according to claim 1, wherein the antioxidant is one of β-(3,5-di-tert-butyl-4-hydroxyphenyl)propanoic acid n-octadecyl alcohol ester, tetrakis[β -(3.5-di-tert-butyl,4-hydroxyphenyl) propionic acid] pentaerythritol or N,N'-bis [3-(3,5-di-tert-butyl-4-hydroxyphenyl)propionyl] hexamethylenediamine.

4. The spraying-free memory nano nylon resin according to claim 1, wherein the lubricant is one of calcium stearate, polyethylene wax or magnesium carbonate.

5. The spraying-free memory nano nylon resin according to claim 1, wherein the pigment is a carbon black.

6. A preparation method of spraying-free memory nano nylon resin according to any one of the claims 1 to 5, comprising the following steps:
S1: mixing raw materials according to a specified ratio, stirring and blending at 80-100°C under a certain rotational speed, and then feeding into an extruder for kneading and extrusion;
S2: cooling the extrudate with water, and then pelletizing to obtain a final product.

7. The preparation method of spraying-free memory nano nylon resin according to claim 6, wherein a rotational speed is 1000-1500rpm and a mixing temperature is 150-200°C.
